# EUROPEAN PATENT APPLICATION

(11) **EP 4 718 448 A1**
(43) Date of publication of application: **01.04.2026**
(21) Application number: 24832333.9
(22) Date of filing: 13.06.2024
(51) Int. Cl.: G10L 15/22, G10L 17/24, G06F 3/16, G06F 9/50, G10L 15/30

(54) **METHOD FOR PROCESSING VOICE SIGNAL AND ELECTRONIC DEVICE PERFORMING SAME**

(30) Priority: 27.06.2023 KR 20230082836; 27.07.2023 KR 20230098428
(71) Applicant: Samsung Electronics Co., Ltd., Suwon-si, Gyeonggi-do 16677 (KR)
(72) Inventor: PARK, Suneung, Suwon-si Gyeonggi-do 16677 (KR); SEO, Hyunju, Suwon-si Gyeonggi-do 16677 (KR); KIM, Sanghee, Suwon-si Gyeonggi-do 16677 (KR); HWANG, Inchul, Suwon-si Gyeonggi-do 16677 (KR)
(74) Representative: Gulde & Partner
(86) International application number: PCT/KR2024/008105
(87) International publication number: WO 2025/005553

(57) **Abstract**

Disclosed are a method for processing a voice signal and an electronic device performing same. The electronic device, according to various embodiments, may comprise: a processor; and a memory electrically connected to the processor and storing instructions executed by the processor. The processor, when the instructions are executed by the processor, may enable the electronic device to receive a voice signal from a user. The processor may enable the electronic device to determine an optimal device for processing the voice signal, among a plurality of external electronic devices communicatively connected to the electronic device. The processor may enable the electronic device to transmit a request for processing the voice signal to the optimal device so as to process the voice signal. The processor may enable the electronic device to perform an operation according to the result of processing the voice signal received from the optimal device.

## Description

### TECHNICAL FIELD

The following disclosure relates to a method of processing a voice signal and an electronic device for performing the method.

### BACKGROUND ART

In using a voice assistant, when a user utterance is input to a terminal, the terminal generally transmits the utterance to a server, and speech recognition operations such as speech recognition, interpretation, and execution are performed by the server.

Recently, in terminals equipped with on-device functions, a method has been adopted in which a terminal performs speech recognition, interpretation, and execution for some or all of the utterance without transmitting the utterance to a server. When a terminal equipped with an on-device function performs a speech recognition operation, there are numerous advantages in terms of security, performance, and cost.

The process of recognizing/interpreting/executing a user utterance within a terminal requires very high performance, and therefore is generally supported only in high-end models.

The above information may be presented as the related art to help with the understanding of the disclosure. No arguments or decisions are raised to whether any of the above description is applicable as the prior art related to the present disclosure.

### DISCLOSURE OF THE INVENTION

### TECHNICAL SOLUTIONS

According to various embodiments, an electronic device includes a processor and memory electrically connected to the processor and storing instructions to be executed by the processor. When the instructions are executed by the processor, the processor causes the electronic device to receive a voice signal from a user. The processor causes the electronic device to determine an optimal device for processing the voice signal from among a plurality of external electronic devices connected to the electronic device for communication. The processor causes the electronic device to transmit a request for processing the voice signal to the optimal device to process the voice signal. The processor causes the electronic device to perform an operation according to a result of processing the voice signal received from the optimal device.

According to various embodiments, an electronic device includes a natural language platform for processing a voice signal, a processor, and memory electrically connected to the processor and storing instructions to be executed by the processor. When the instructions are executed by the processor, the processor causes the electronic device to transmit a state of the electronic device to an external electronic device that is in communication. When the external electronic device determines that the electronic device is an optimal device for processing the voice signal, the processor causes the electronic device to receive a request for processing a voice signal from the external electronic device. In response to the request, the processor causes the electronic device to, using the natural language platform, transmit, to the external electronic device, a result of processing the voice signal received from the external electronic device.

According to various embodiments, a method of processing a voice signal includes receiving a voice signal from a user, determining an optimal device for processing the voice signal from among a plurality of external electronic devices connected to an electronic device for communication, transmitting a request for processing the voice signal to the optimal device to process the voice signal, and performing an operation according to a result of processing the voice signal received from the optimal device.

According to various embodiments, a method of processing a voice signal includes transmitting a state of the electronic device to an external electronic device that is in communication, when the external electronic device determines that the electronic device is an optimal device for processing the voice signal, receiving a request for processing a voice signal from the external electronic device, and in response to the request, using the natural language platform, transmitting, to the external electronic device, a result of processing the voice signal received from the external electronic device.

### BRIEF DESCRIPTION OF DRAWINGS

FIG. 1 is a block diagram of an electronic device in a network environment, according to various embodiments.
FIG. 2 is a block diagram illustrating an integrated intelligence system according to an embodiment.
FIG. 3 is a diagram illustrating a form in which relationship information regarding relationships between concepts and actions is stored in a database (DB), according to an embodiment.
FIG. 4 is a diagram illustrating a user terminal displaying a screen processing a received voice input through an intelligent app, according to an embodiment.
FIG. 5 is a diagram illustrating operations of an electronic device and external electronic devices, according to various embodiments.
FIG. 6 is a flowchart of a method of processing an audio signal, performed by an electronic device, according to various embodiments.
FIG. 7 is a flowchart illustrating an operation in which an electronic device performs communication connections with a plurality of external electronic devices, according to various embodiments.
FIGS. 8 and 9 are diagrams illustrating a method of processing an audio signal, according to various embodiments.
FIG. 10 is a diagram illustrating an operation in which an electronic device and a plurality of external electronic devices receive, from a server, information about a device for performing speech recognition, according to various embodiments.
FIG. 11 is a diagram illustrating an operation in which an electronic device performs speech recognition using an external electronic device 1, according to various embodiments.
FIG. 12 is a flowchart of an operation in which an electronic device performs a method of processing an audio signal, according to various embodiments.
FIGS. 13 and 14 are diagrams illustrating user interfaces (UIs) provided by an electronic device, according to various embodiments.
FIGS. 15 and 16 are diagrams illustrating UIs provided by an electronic device, according to various embodiments.

### BEST MODE FOR CARRYING OUT THE INVENTION

Hereinafter, embodiments are described in detail with reference to the accompanying drawings. When describing the embodiments with reference to the accompanying drawings, like reference numerals refer to like elements and a repeated description related thereto will be omitted.

As used herein, "A or B," "at least one of A and B," "at least one of A or B," "A, B or C," "at least one of A, B and C," and "at least one of A, B, or C," each of which may include any one of the items listed together in the corresponding one of the phrases, or all possible combinations thereof.

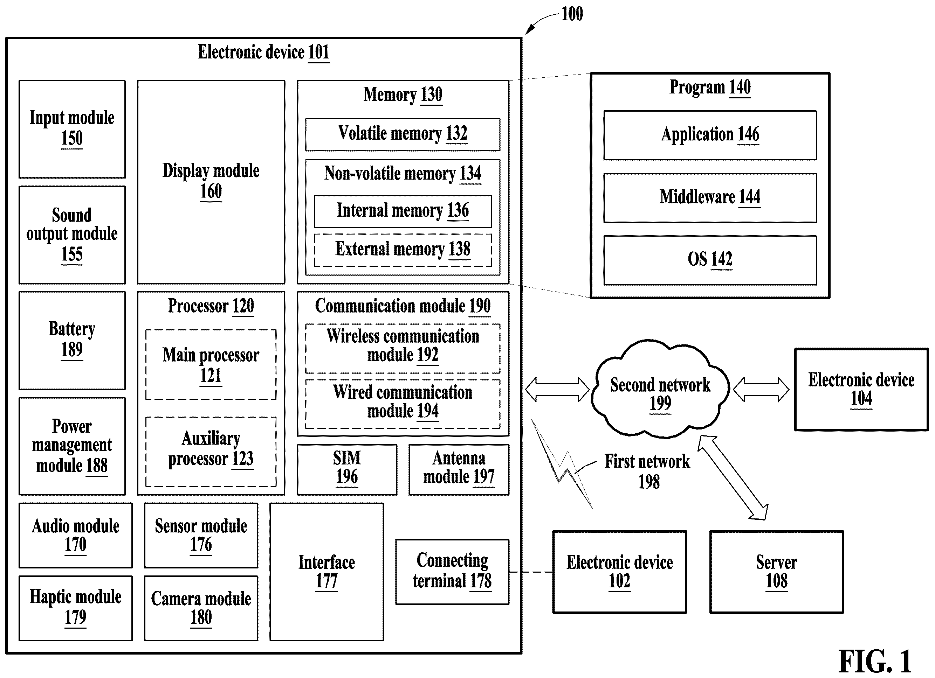

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added to the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., an NPU) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate form, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal or vice versa. According to an embodiment, the audio module 170 may obtain the sound via the input module 150, or output the sound via the sound output module 155 or an external electronic device (e.g., the electronic device 102 such as a speaker or headphones) directly or wirelessly connected to the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more CPs that are operable independently from the processor 120 (e.g., the AP) and support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or a wide area network (WAN)). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 from the plurality of antennas. The signal or power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a PCB, an RFIC disposed on a first surface (e.g., the bottom surface) of the PCB, or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) there between via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-Things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

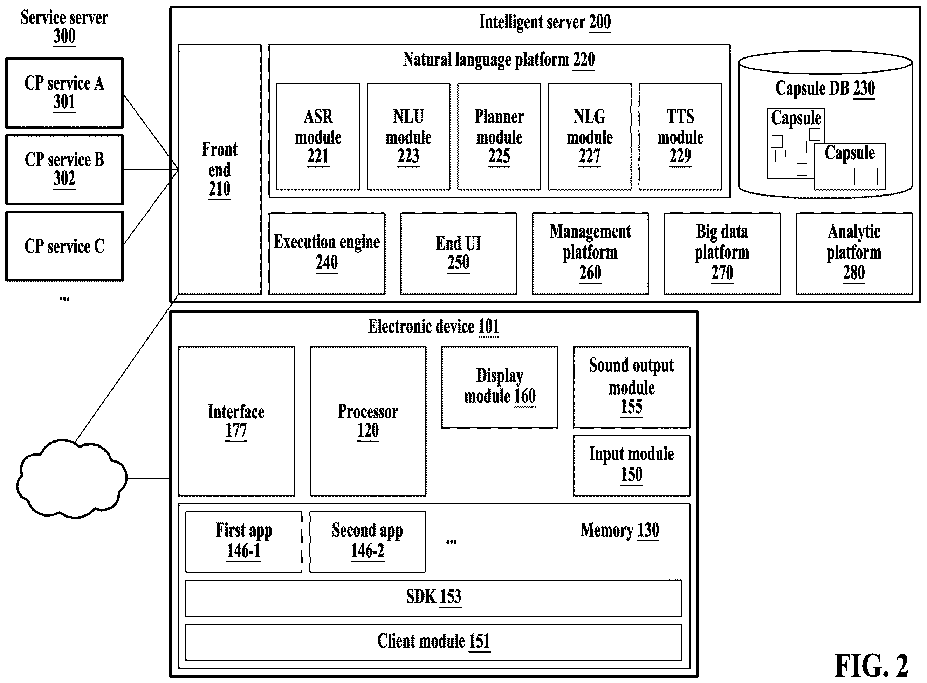

FIG. 2 is a block diagram illustrating an integrated intelligence system according to an embodiment.

Referring to FIG. 2, an integrated intelligence system of an embodiment may include the electronic device 101, an intelligent server 200 (e.g., the server 108 of FIG. 1), and a service server 300 (e.g., the server 108 of FIG. 1).

The electronic device 101 may be a terminal device (or an electronic device) connectable to the Internet, and may be, for example, a mobile phone, a smartphone, a personal digital assistant (PDA), a notebook computer, a TV, a white home appliance, a wearable device, a head-mounted display (HMD), or a smart speaker.

According to the illustrated embodiment, the electronic device 101 may include the interface 177, the input module 150, the sound output module 155, the display module 160, the memory 130, or the processor 120. The components listed above may be operationally or electrically connected to one another.

The interface 177 of an embodiment may be connected to an external device and configured to transmit and receive data to and from the external device. The input module 150 of an embodiment may receive a sound (e.g., a user utterance) and convert the sound into an electrical signal. The sound output module 155 of an embodiment may output an electrical signal as a sound (e.g., a voice).

The display module 160 of an embodiment may be configured to display an image or video. The display module 160 of an embodiment may also display a graphical user interface (GUI) of an app (or an application program) being executed. The display module 160 of an embodiment may receive a touch input through a touch sensor. For example, the display module 160 may receive a text input through the touch sensor in an on-screen keyboard area displayed in the display module 160.

The memory 130 of an embodiment may store a client module 151, a software development kit (SDK) 153, and a plurality of apps 146. The client module 151 and the SDK 153 may configure a framework (or a solution program) for performing general-purpose functions. In addition, the client module 151 or the SDK 153 may configure a framework for processing a user input (e.g., a voice input, a text input, or a touch input).

The plurality of apps 146 stored in the memory 130 of an embodiment may be programs for performing designated functions. According to an embodiment, the plurality of apps 146 may include a first app 146-1 and a second app 146-2. According to an embodiment, each of the plurality of apps 146 may include a plurality of actions for performing a designated function. For example, the apps may include an alarm app, a messaging app, and/or a scheduling app. According to an embodiment, the plurality of apps 146 may be executed by the processor 120 to sequentially execute at least a portion of the plurality of actions.

The processor 120 of an embodiment may control the overall operation of the electronic device 101. For example, the processor 120 may be electrically connected to the interface 177, the input module 150, the sound output module 155, and the display module 160 to perform a designated action.

The processor 120 of an embodiment may also perform the designated function by executing the program stored in the memory 130. For example, the processor 120 may execute at least one of the client module 151 or the SDK 153 to perform the following operation for processing a user input. The processor 120 may control the actions of the plurality of apps 146 through, for example, the SDK 153. The following operation, which is the operation of the client module 151 or the SDK 153, may be performed by the processor 120.

The client module 151 of an embodiment may receive a user input. For example, the client module 151 may receive a voice signal corresponding to a user utterance sensed through the input module 150. Alternatively, the client module 151 may receive a touch input sensed through the display module 160. Alternatively, the client module 151 may receive a text input sensed through a keyboard or an on-screen keyboard. In addition, the client module 151 may receive various types of user inputs sensed through an input module included in the electronic device 101 or an input module connected to the electronic device 101. The client module 151 may transmit the received user input to the intelligent server 200. The client module 151 may transmit state information of the electronic device 101 together with the received user input to the intelligent server 200. The state information may be, for example, execution state information of an app.

The client module 151 of an embodiment may receive a result corresponding to the received user input. For example, when the intelligent server 200 is capable of calculating a result corresponding to the received user input, the client module 151 may receive the result corresponding to the received voice input. The client module 151 may display the received result on the display module 160. Additionally, the client module 151 may output the received result in an audio form through the sound output module 155.

The client module 151 of an embodiment may receive a plan corresponding to the received user input. The client module 151 may display results of executing a plurality of actions of an app according to the plan on the display module 160. For example, the client module 151 may sequentially display the results of executing the plurality of actions on the display and output the results in an audio form through the sound output module 155. In another example, the electronic device 101 may display only a portion of the results of executing the plurality of actions (e.g., a result of the last action) on the display module 160 and output the portion of the results in an audio form through the sound output module 155.

According to an embodiment, the client module 151 may receive a request for obtaining information necessary for calculating a result corresponding to the user input from the intelligent server 200. According to an embodiment, the client module 151 may transmit the necessary information to the intelligent server 200 in response to the request.

The client module 151 of an embodiment may transmit information regarding the results of executing the plurality of actions according to the plan to the intelligent server 200. The intelligent server 200 may confirm that the received user input is correctly processed using the information regarding the results.

The client module 151 of an embodiment may include a speech recognition module. According to an embodiment, the client module 151 may recognize a voice input for performing a limited function through the speech recognition module. For example, the client module 151 may execute an intelligent app for processing a voice input to perform an organic operation through a designated input (e.g., Wake up!).

The intelligent server 200 of an embodiment may receive information related to a user voice input from the electronic device 101 through a communication network. According to an embodiment, the intelligent server 200 may change data related to the received voice input into text data. According to an embodiment, the intelligent server 200 may generate a plan for performing a task corresponding to the user voice input based on the text data.

According to an embodiment, the plan may be generated by an AI system. The AI system may be a rule-based system or a neural network-based system (e.g., a feedforward neural network (FNN) or an RNN). Alternatively, the AI system may be a combination of the above-described systems or other AI systems. According to an embodiment, the plan may be selected from a set of pre-defined plans or may be generated in real time in response to a user request. For example, the AI system may select at least one plan from the pre-defined plans.

The intelligent server 200 of an embodiment may transmit a result according to the generated plan to the electronic device 101 or transmit the generated plan to the electronic device 101. According to an embodiment, the electronic device 101 may display the result according to the plan on the display module 160. According to an embodiment, the electronic device 101 may display a result of executing an action according to the plan on the display module 160.

The intelligent server 200 of an embodiment may include a front end 210, a natural language platform 220, a capsule database (DB) 230, an execution engine 240, an end UI 250, a management platform 260, a big data platform 270, or an analytic platform 280.

The front end 210 of an embodiment may receive the received user input from the electronic device 101. The front end 210 may transmit a response corresponding to the user input.

According to an embodiment, the natural language platform 220 may include an automatic speech recognition (ASR) module 221, a natural language understanding (NLU) module 223, a planner module 225, a natural language generator (NLG) module 227, or a text-to-speech (TTS) module 229.

The ASR module 221 of an embodiment may convert the voice input received from the electronic device 101 into text data. The NLU module 223 of an embodiment may discern an intent of a user using the text data of the voice input. For example, the NLU module 223 may discern an intent of a user by performing syntactic analysis or semantic analysis on a user input in the form of text data. The NLU module 223 of an embodiment may discern a meaning of a word extracted from the user input using a linguistic feature (e.g., a grammatical element) of a morpheme or a phrase and may determine the intent of the user by matching the discerned meaning of the word to an intent. The NLU module 223 may obtain intent information corresponding to a user utterance. The intent information may be information indicating the intent of the user determined through an analysis of the text data. The intent information may include information indicating an action or function that the user intends to execute using a device.

The planner module 225 of an embodiment may generate a plan using a parameter and the intent determined by the NLU module 223. According to an embodiment, the planner module 225 may determine a plurality of domains required to perform a task based on the determined intent. The planner module 225 may determine a plurality of actions included in each of the plurality of domains determined based on the intent. According to an embodiment, the planner module 225 may determine a parameter required to execute the determined plurality of actions, or a result value output by the execution of the plurality of actions. The parameter and the result value may be defined as a concept of a designated form (or class). Accordingly, the plan may include a plurality of actions and a plurality of concepts determined by the intent of the user. The planner module 225 may determine relationships between the plurality of actions and the plurality of concepts stepwise (or hierarchically). For example, based on the plurality of concepts, the planner module 225 may determine an execution order of the plurality of actions determined based on the intent of the user. In other words, the planner module 225 may determine the execution order of the plurality of actions based on the parameter required for the execution of the plurality of actions and results output by the execution of the plurality of actions. Accordingly, the planner module 225 may generate a plan including connection information (e.g., ontology) regarding connections between the plurality of actions and the plurality of concepts. The planner module 225 may generate the plan using information stored in the capsule DB 230 that stores a set of relationships between concepts and actions.

The NLG module 227 of an embodiment may change designated information to a text form. The information changed to the text form may be in the form of a natural language utterance. The TTS module 229 of an embodiment may change information in a text form into information in a speech form.

According to an embodiment, some or all of the functions of the natural language platform 220 may be implemented in the electronic device 101 as well.

The capsule DB 230 may store information regarding the relationships between the plurality of concepts and actions corresponding to the plurality of domains. A capsule according to an embodiment may include a plurality of action objects (or action information) and concept objects (or concept information) included in the plan. According to an embodiment, the capsule DB 230 may store a plurality of capsules in the form of a concept action network (CAN). According to an embodiment, the plurality of capsules may be stored in a function registry included in the capsule DB 230.

The capsule DB 230 may include a strategy registry that stores strategy information necessary for determining a plan corresponding to a voice input. The strategy information may include reference information for determining one plan when there is a plurality of plans corresponding to the user input. According to an embodiment, the capsule DB 230 may include a follow-up registry that stores information on follow-up actions for suggesting a follow-up action to the user in a designated situation. The follow-up action may include, for example, a follow-up utterance. According to an embodiment, the capsule DB 230 may include a layout registry that stores layout information that is information output through the electronic device 101. According to an embodiment, the capsule DB 230 may include a vocabulary registry that stores vocabulary information included in capsule information. According to an embodiment, the capsule DB 230 may include a dialog registry that stores information regarding a dialog (or an interaction) with a user. The capsule DB 230 may update the stored objects through a developer tool. The developer tool may include, for example, a function editor for updating an action object or a concept object. The developer tool may include a vocabulary editor for updating a vocabulary. The developer tool may include a strategy editor for generating and registering a strategy for determining a plan. The developer tool may include a dialog editor for generating a dialog with a user. The developer tool may include a follow-up editor capable of activating a subsequent goal and editing a subsequent utterance that provides hints. The subsequent goal may be determined based on a currently set goal, a preference of a user, or an environmental condition. In an embodiment, the capsule DB 230 may also be implemented within the electronic device 101.

The execution engine 240 of an embodiment may calculate a result using the generated plan. The end UI 250 may transmit the calculated result to the electronic device 101. Accordingly, the electronic device 101 may receive the result and provide the received result to the user. The management platform 260 of an embodiment may manage information used by the intelligent server 200. The big data platform 270 of an embodiment may collect data of the user. The analytic platform 280 of an embodiment may manage a quality of service (QoS) of the intelligent server 200. For example, the analytic platform 280 may manage the components and processing rate (or efficiency) of the intelligent server 200.

The service server 300 of an embodiment may include a CP service A 301, a CP service B 302, and a CP service C. The service server 300 of an embodiment may provide a designated service (e.g., food order or hotel reservation) to the electronic device 101. According to an embodiment, the service server 300 may be a server operated by a third party. The service server 300 of an embodiment may provide information to be used for generating a plan corresponding to the received user input to the intelligent server 200. The provided information may be stored in the capsule DB 230. In addition, the service server 300 may provide result information according to the plan to the intelligent server 200.

In the integrated intelligence system 10 described above, the electronic device 101 may provide various intelligent services to the user in response to a user input. The user input may include, for example, an input through a physical button, a touch input, or a voice input.

In an embodiment, the electronic device 101 may provide a speech recognition service through an intelligent app (or a speech recognition app) stored therein. In this case, for example, the electronic device 101 may recognize a user utterance or a voice input received through the microphone, and provide a service corresponding to the recognized voice input to the user.

In an embodiment, based on the received voice input, the electronic device 101 may perform a designated action alone or together with the intelligent server and/or a service server. For example, the electronic device 101 may execute an app corresponding to the received voice input and perform a designated action through the executed app.

In an embodiment, when the electronic device 101 provides a service together with the intelligent server 200 and/or the service server, the user terminal may detect a user utterance using the input module 150 and generate a signal (or voice data) corresponding to the detected user utterance. The user terminal may transmit the voice data to the intelligent server 200 using the interface 177.

The intelligent server 200 according to an embodiment may generate, as a response to the voice input received from the electronic device 101, a plan for performing a task corresponding to the voice input or a result of performing an action according to the plan. The plan may include, for example, a plurality of actions for performing a task corresponding to a voice input of a user, and a plurality of concepts related to the plurality of actions. The concepts may be defined as parameters that are input for execution of the plurality of actions or result values that are output by execution of the plurality of actions. The plan may include connection information on connections between the plurality of actions and the plurality of concepts.

The electronic device 101 of an embodiment may receive the response using the interface 177. The electronic device 101 may output a voice signal generated inside the electronic device 101 to the outside using the sound output module 155, or may output an image generated inside the electronic device 101 to the outside using the display module 160.

]

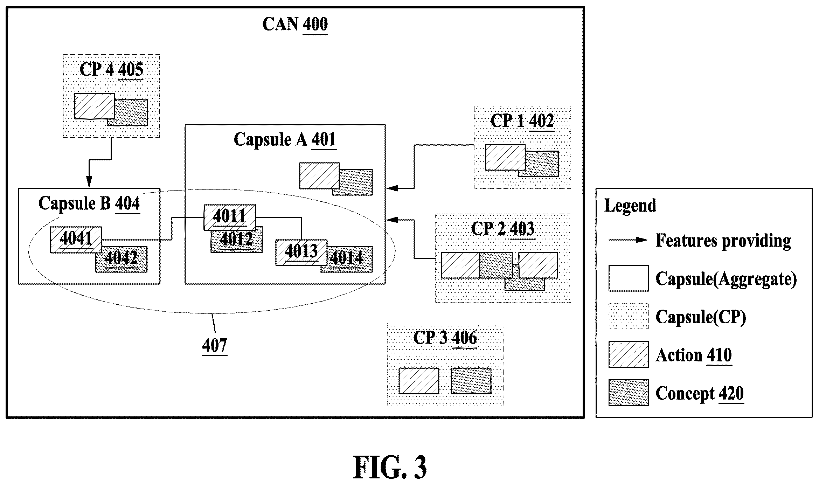

FIG. 3 is a diagram illustrating a form in which relationship information regarding relationships between concepts and actions is stored in a DB, according to various embodiments.

A capsule DB (e.g., the capsule DB 230 of FIG. 2) of the intelligent server (e.g., the intelligent server 200 of FIG. 2) may store capsules in the form of a CAN. The capsule DB may store an action for processing a task corresponding to a voice input of a user and a parameter necessary for the action in the form of a CAN.

The capsule DB may store a plurality of capsules (a capsule A 401 and a capsule B 404) respectively corresponding to a plurality of domains (e.g., applications). According to an embodiment, one capsule (e.g., the capsule A 401) may correspond to one domain (e.g., a location (geo) or an application). In addition, one capsule may correspond to at least one service provider (e.g., a CP 1 402, a CP 2 403, a CP 3 406, or a CP 4 405) for performing a function for a domain related to the capsule. According to an embodiment, one capsule may include at least one action 410 and at least one concept 420 to perform a designated function.

A natural language platform (e.g., the natural language platform 220 of FIG. 2) may generate a plan for performing a task corresponding to the received voice input using the capsules stored in the capsule DB. For example, a planner module (e.g., the planner module 225 of FIG. 2) of the natural language platform may generate a plan using the capsules stored in the capsule DB. For example, a plan 407 may be generated using actions 4011 and 4013 and concepts 4012 and 4014 of the capsule A 410 and an action 4041 and a concept 4042 of the capsule B 404.

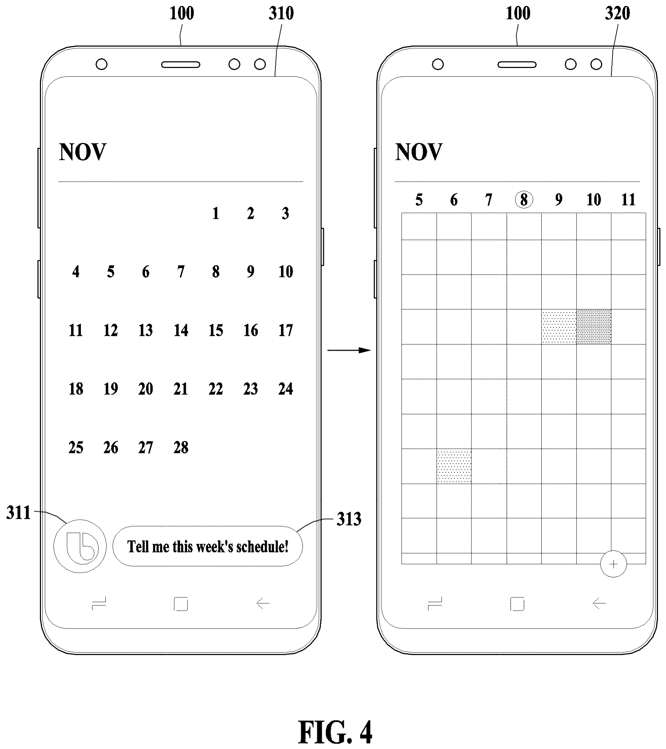

FIG. 4 is a diagram illustrating a screen of a user terminal processing a received voice input through an intelligent app, according to various embodiments.

The electronic device 101 may execute an intelligent app to process a user input through an intelligent server (e.g., the intelligent server 200 of FIG. 2).

According to an embodiment, on a screen 310, when a designated voice input (e.g., Wake up!) is recognized or an input through a hardware key (e.g., a dedicated hardware key) is received, the electronic device 101 may execute an intelligent app for processing the voice input. The electronic device 101 may execute the intelligent app, for example, in a state in which a scheduling app is executed. According to an embodiment, the electronic device 101 may display an object (e.g., an icon) 311 corresponding to the intelligent app on the display module 160. According to an embodiment, the electronic device 101 may receive a voice input by a user utterance. For example, the electronic device 101 may receive a voice input of "Tell me this week's schedule!". According to an embodiment, the electronic device 101 may display a UI 313 (e.g., an input window) of the intelligent app in which text data of the received voice input is displayed on a display module (e.g., the display module 160 of FIG. 2).

According to an embodiment, on a screen 320, the electronic device 101 may display a result corresponding to the received voice input on the display module 160. For example, the electronic device 101 may receive a plan corresponding to the received user input, and display "this week's schedule" on the display module 160 according to the plan.

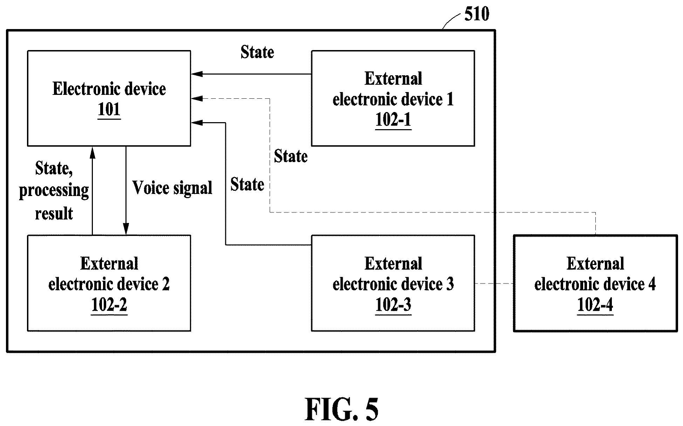

FIG. 5 is a diagram illustrating operations of the electronic device 101 (e.g., the electronic device 101 of FIGS. 1 and 2) and a plurality of external electronic devices 102-1, 102-2, 102-3, and 102-4 (e.g., the electronic devices 101, 102, and 104 of FIG. 1 and the electronic device 101 of FIG. 2), according to various embodiments. The electronic device 101 and the plurality of external electronic devices 102-1, 102-2, 102-3, and 102-4 are described according to an example in which the electronic device 101 does not include a natural language platform (e.g., the natural language platform 220 of FIG. 2) with reference to FIGS. 5 to 12, but embodiments are not limited thereto.

For example, the descriptions of the electronic device 101 and the plurality of external electronic devices 102-1, 102-2, 102-3, and 102-4 with reference to FIGS. 5 to 12 may apply to a case in which the electronic device 101 includes the natural language platform 220 in substantially the same manner.

For example, the plurality of external electronic devices 102-1, 102-2, 102-3, and 102-4 (e.g., a TV, a speaker, a refrigerator, a hub, and an edge device) may be various devices that may be connected to the electronic device 101 for communication. The plurality of external electronic devices 102-1, 102-2, 102-3, and 102-4 may be various devices that may be connected to another electronic device for communication in an Internet of Things (IoT) environment.

Using an input module (e.g., the input module 150 of FIGS. 1 and 2 or a microphone), the electronic device 101 may receive a voice signal from a user. When it is determined that the voice signal received from the user includes a set utterance (e.g., a wake-up word), the electronic device 101 may perform a communication connection with the plurality of external electronic devices 102-1, 102-2, and 102-3. The electronic device 101 may be connected to the plurality of external electronic devices 102-1, 102-2, and 102-3 for communication, so a local network 510 may be formed.

The electronic device 101 may determine an optimal device for processing a voice signal from among the plurality of external electronic devices 102-1, 102-2, and 102-3. For example, based on states of the plurality of external electronic devices 102-1, 102-2, and 102-3 and a set policy, the electronic device 101 may determine the optimal device.

The electronic device 101 may receive the states of the plurality of external electronic devices 102-1, 102-2, and 102-3 from the plurality of external electronic devices 102-1, 102-2, and 102-3. For example, the states of the plurality of external electronic devices 102-1, 102-2, and 102-3 may include hardware performance, network performance, an operation state (e.g., utilization), and a supported device type.

The hardware performance may be the performance of processors and memory of the external electronic devices 102-1, 102-2, and 102-3. The operation state may be the utilization of the processors and memory of the external electronic devices 102-1, 102-2, and 102-3. The network performance may be the performance of a network connected between the external electronic devices 102-1, 102-2, and 102-3 and the electronic device 101.

The supported device type may be the type of device that corresponds to natural language platforms of the external electronic devices 102-1, 102-2, and 102-3. For example, the supported device type may be classified as a type of electronic device, such as a speaker, refrigerator, or mobile device.

The supported device type of a natural language platform may be determined by the types of the external electronic devices 102-1, 102-2, and 102-3. According to the supported device type of the natural language platform, a voice command to be processed and a plan to be generated according to a result of processing the voice command may be determined.

When the external electronic devices 102-1, 102-2, and 102-3 are speakers, the supported device type of the natural language platforms included in the external electronic devices 102-1, 102-2, and 102-3 may be a speaker. When the supported device type includes a speaker, the natural language platforms of the external electronic devices 102-1, 102-2, and 102-3 may process a voice command "Turn up the volume" and generate a control signal to increase the volume of the audio being played.

When the supported device type of the natural language platforms does not include a speaker, even when the voice command "Turn up the volume" is processed, a control signal to increase the volume of the audio may not be generated.

As described above, the supported device type may be classified according to the type of the electronic device 101 (or the external electronic devices 102-1, 102-2, and 102-3). According to the supported device type of the natural language platform, the electronic device 101 may process a voice command and generate a result (e.g., a plan) of processing the voice command.

A policy may include a priority for determining an optimal device. For example, the policy may be set such that, among the external electronic devices 102-1, 102-2, and 102-3, the supported device types of which include the type of the electronic device 101, an external electronic device with the highest network performance may be assigned the highest priority. The priority included in the policy described above is an example, and embodiments are not limited thereto. For example, the policy may include weights set on network performance, hardware performance, and an operation state among the external electronic devices 102-1, 102-2, and 102-3, the supported device types of which include the type of the electronic device 101. The priority of the plurality of external electronic devices 102-1, 102-2, and 102-3 may be determined based on the weights set for the network performance, hardware performance, and operation state among the external electronic devices 102-1, 102-2, and 102-3, the supported device types of which include the type of the electronic device 101.

For example, as the network performance and/or hardware performance increases, the priority of the external electronic devices 102-1, 102-2, and 102-3 may increase. The closer the operation states of the external electronic devices 102-1, 102-2, and 102-3 are to a sleep state or an idle state, the higher the priority of the external electronic devices 102-1, 102-2, and 102-3 may be, and the closer the operation states of the external electronic devices 102-1, 102-2, and 102-3 are to a busy state, the lower the priority of the external electronic devices 102-1, 102-2, and 102-3 may be. Whether an operation state is a sleep state/idle state or a busy state may be determined based on a processor usage rate and a memory usage rate. For example, when the processor usage rate of the external electronic devices 102-1, 102-2, and 102-3 is about 100%, it may indicate a busy state, and when the processor usage rate is about 0%, it may indicate an idle state.

As illustrated in FIG. 5, the electronic device 101 according to an embodiment may receive a state of the external electronic device 102-4 from the external electronic device 4 102-4 that is not connected to the local network 510. For example, the external electronic device 4 102-4 may be connected to the external electronic device 3 102-3 for communication. The external electronic device 4 102-4 may receive a control signal to transmit a state from the electronic device 101 through the external electronic device 3 102-3 and transmit the state to the electronic device 101 according to the received control signal. The external electronic device 4 102-4 may perform a communication connection with the electronic device 101 and transmit the state directly to the electronic device 101 or transmit the state to the electronic device 101 through the external electronic device 3 102-3.

The electronic device 101 according to an embodiment may transmit a voice signal to a determined optimal device. For example, in FIG. 5, based on the states of the plurality of external electronic devices 102-1, 102-2, 102-3, and 102-4 and a policy, the electronic device 101 may determine the external electronic device 2 102-2 as an optimal device. The electronic device 101 may transmit a voice signal to the external electronic device 2 102-2 determined as the optimal device.

For example, the electronic device 101 may be a speaker. The external electronic device 1 102-1 may be a device that does not include a natural language platform. The external electronic device 2 102-2 may include a natural language platform, the supported device types of which are a speaker, a mobile device, and a TV. The external electronic device 3 102-3 may include a natural language platform, the supported device types of which are a mobile device and a refrigerator.

For example, the electronic device 101 may use a policy to determine the priority of the plurality of external electronic devices 102-1, 102-2, and 102-3, depending on whether the plurality of external electronic devices 102-1, 102-2, and 102-3 may process a voice signal.

For example, when the supported device types of the plurality of external electronic devices 102-1, 102-2, and 102-3 correspond to the type of the electronic device 101, the electronic device 101 may determine that the plurality of external electronic devices 102-1, 102-2, and 102-3 may process a voice signal.

The electronic device 101 according to an embodiment may determine an optimal device based on whether a supported device type of an external electronic device corresponds to the type of the electronic device 101. In the example described above, the electronic device 101 may determine, as the optimal device, the external electronic device 2 102-2, the supported device type of which includes a speaker.

According to an embodiment, when there is a plurality of external electronic devices, the supported device types of which correspond to the type of the electronic device 101 among the plurality of external electronic devices 102-1, 102-2, and 102-3, the electronic device 101 may determine the optimal device according to the policy.

For example, when the supported device types of the external electronic device 1 102-1 and the external electronic device 2 102-2 correspond to the type of the electronic device 101, the electronic device 101 may determine the optimal device based on the hardware performance, network performance, and/or operation states of the external electronic device 1 102-1 and the external electronic device 2 102-2. According to the policy, the electronic device 101 may determine, as the optimal device, an external electronic device with high hardware performance, high network performance, or low utilization.

For example, the policy may include a weight for hardware performance, network performance, or an operation state. Using the weight for hardware performance, network performance, or operation state, the electronic device 101 may determine the priority of external electronic devices, the supported device types of which correspond to the type of the electronic device 101 among the plurality of external electronic devices 102-1, 102-2, and 102-3. According to the determined priority, the electronic device 101 may determine, as the optimal device, an external electronic device with the highest priority.

For example, when the hardware performance of the external electronic device 1 102-1 is substantially the same as the hardware performance of the external electronic device 2 102-2 and the network performance of the external electronic device 1 102-1 is greater than the network performance of the external electronic device 2 102-2, the electronic device 101 may determine the external electronic device 1 102-1 as the optimal device.

For example, when the hardware performance and the network performance of the external electronic device 1 102-1 are substantially the same as the hardware performance and the network performance of the external electronic device 2 102-2, the operation state of the external electronic device 1 102-1 is an idle state, and the operation state of the external electronic device 2 102-2 is a busy state, the electronic device 101 may determine the external electronic device 1 102-1 as the optimal device.

For example, when the hardware performance of the external electronic device 1 102-1 is less than the hardware performance of the external electronic device 2 102-2 and the network performance of the external electronic device 1 102-1 is greater than the network performance of the external electronic device 2 102-2, the electronic device 101 may determine the optimal device among the external electronic device 1 102-1 and the external electronic device 2 102-2 according to a weight. For example, according to the weights for the hardware performance and network performance, when the priority of the external electronic device 1 102-1 is greater than the priority of the external electronic device 2 102-2, the electronic device 101 may determine the external electronic device 1 102-1 as the optimal device.

The weights included in the policy described above are examples, and embodiments are not limited thereto.

According to an embodiment, an external electronic device determined as the optimal device may process a voice signal and transmit the result of processing the voice signal to the electronic device 101. The external electronic device 2 102-2 determined as the optimal device in FIG. 5 may process a voice command using a natural language platform. The external electronic device 2 102-2 may transmit the result of processing the voice command to the electronic device 101.

The electronic device 101 according to an embodiment may operate according to the result of processing the voice command received from the optimal device. The electronic device 101 may provide an interface for providing the result of processing the voice command to a user. The electronic device 101 may control a component of the electronic device (e.g., the processor 120, the memory 130, and the sound output module 155 of FIGS. 1 and 2) to perform the result of processing the voice command.

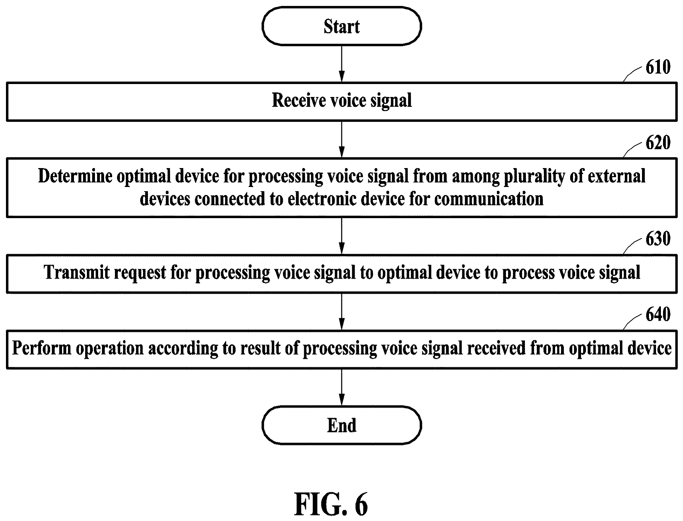

FIG. 6 is a flowchart illustrating a method of processing an audio signal, performed by an electronic device (e.g., the electronic device 101 of FIGS. 1, 2, and 5), according to various embodiments.

In the following embodiments, operations may be performed sequentially but not necessarily. For example, the order of the operations may change, and at least two of the operations may be performed in parallel.

According to an embodiment, it may be understood that operations 610 to 640 may be performed by a processor (e.g., the processor 120 of FIGS. 1 and 2) of an electronic device (e.g., the electronic device 101 of FIGS. 1, 2, and 5).

According to an embodiment, in operation 610, the electronic device 101 may receive a voice signal. For example, using an input module (e.g., the input module 150 of FIGS. 1 and 2), the electronic device 101 may receive a voice signal from a user.

According to an embodiment, in operation 620, the electronic device 101 may determine an optimal device for processing a voice signal from among a plurality of external electronic devices (e.g., the electronic devices 101, 102, and 104 of FIG. 1, the electronic device 101 of FIG. 2, and the plurality of external electronic devices 102-1, 102-2, 102-3, and 102-4 of FIG. 5) connected to the electronic device 101 for communication.

For example, the electronic device 101 may perform communication connections with the plurality of external electronic devices 102-1, 102-2, 102-3, and 102-4. The electronic device 101 may receive the states of the plurality of external electronic devices 102-1, 102-2, 102-3, and 102-4 from the plurality of external electronic devices 102-1, 102-2, 102-3, and 102-4. Based on the states of the plurality of external electronic devices 102-1, 102-2, 102-3, and 102-4 and a set policy, the electronic device 101 may determine the optimal device.

According to an embodiment, the electronic device 101 may determine an optimal device from among external electronic devices including a natural language platform (e.g., the natural language platform 220 of FIG. 2), wherein a supported device type of the natural language platform 220 includes the type of the electronic device 101. When there is a plurality of external electronic devices including the natural language platform 220, wherein the supported device type of the natural language platform 220 includes the type of the electronic device 101, the electronic device 101 may determine the optimal device according to a policy. Based on a state (e.g., hardware performance, network performance, and an operation state) of each external electronic device, the policy may be a criterion set to determine the optimal device from among the plurality of external electronic devices 102-1, 102-2, 102-3, and 102-4. The policy may include a weight for the state of an external electronic device, and the electronic device 101 may determine the priority of the plurality of external electronic devices 102-1, 102-2, 102-3, and 102-4 according to the policy. The electronic device 101 may determine, as the optimal device, an external electronic device with the highest priority determined according to the policy.

For example, the electronic device 101 may determine a set external electronic device as the optimal device from among the plurality of external electronic devices 102-1, 102-2, 102-3, and 102-4.

For example, the policy may include a set external electronic device. The electronic device 101 may determine, according to the policy, the set external electronic device as the optimal device from among the plurality of external electronic devices 102-1, 102-2, 102-3, and 102-4.

For example, when the external electronic device 2 102-2 of FIG. 5 is the set external electronic device, the electronic device 101 may determine the external electronic device 2 102-2 as the optimal device from among the plurality of external electronic devices 102-1, 102-2, 102-3, and 102-4. When the external electronic device 2 102-2 is not connected to the electronic device 101 for communication (e.g., when not included in a local network (e.g., the local network 510 of FIG. 5)), the electronic device 101 may determine the optimal device from among the plurality of external electronic devices 102-1, 102-3, and 102-4 connected to the electronic device 101 for communication according to the policy.

According to an embodiment, in operation 630, the electronic device 101 may transmit a request for processing a voice signal to the optimal device for processing the voice signal. An external electronic device that receives the request for processing a voice signal may process the voice signal and transmit a result of processing the voice signal to the electronic device 101.

According to an embodiment, in operation 640, the electronic device 101 may perform an operation according to the result of processing the voice signal received from the optimal device. The electronic device 101 may provide information about the result of voice processing to a user in various ways (e.g., a voice notification, screen display using a display module (e.g., the display module 160 of FIGS. 1 and 2), and vibration). The electronic device 101 may perform an operation according to a plan that is the result of processing the voice signal.

The electronic device 101 according to various embodiments may perform communication connections with the plurality of external electronic devices 102-1, 102-2, 102-3, and 102-4 at each set point in time (e.g., cycle) and update the plurality of external electronic devices 102-1, 102-2, 102-3, and 102-4 that are in communication.

For example, when the electronic device 101 receives the voice signal in operation 610, the electronic device 101 may perform communication connections with the plurality of updated external electronic devices 102-1, 102-2, 102-3, and 102-4 and operate according to operation 620, operation 630, and operation 640.

For example, the electronic device 101 may determine the optimal device from among the plurality of updated external electronic devices 102-1, 102-2, 102-3, and 102-4. For example, when the electronic device 101 receives the voice signal in operation 610, the electronic device 101 may transmit a request for processing the voice signal to the optimal device determined from among the plurality of updated external electronic devices 102-1, 102-2, 102-3, and 102-4.

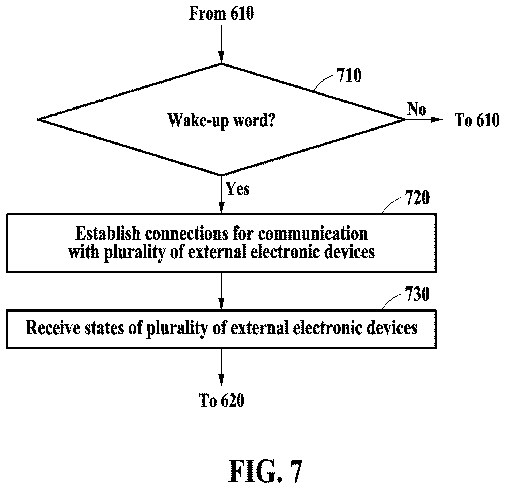

FIG. 7 is a flowchart illustrating an operation of an electronic device (e.g., the electronic device 101 of FIGS. 1, 2, and 5) performing communication connections with a plurality of external electronic devices (e.g., the electronic devices 101, 102, and 104 of FIG. 1, the electronic device 101 of FIG. 2, and the plurality of external electronic devices 102-1, 102-2, 102-3, and 102-4 of FIG. 5), according to various embodiments.

In the following embodiments, operations may be performed sequentially but not necessarily. For example, the order of the operations may change, and at least two of the operations may be performed in parallel.

According to an embodiment, it may be understood that operations 710 to 730 may be performed by a processor (e.g., the processor 120 of FIGS. 1 and 2) of an electronic device (e.g., the electronic device 101 of FIGS. 1, 2, and 5).

According to an embodiment, in operation 710, the electronic device 101 may determine whether the voice signal received in operation 610 includes a wake-up word.

For example, in operation 710, the electronic device 101 may determine whether the voice signal includes a wake-up word. The wake-up word may include a word (e.g., "Wake up" or "Hi, Bixby") set to indicate that an utterance of a user is a voice command or a user-defined wake-up word. When the voice signal received from the user includes the wake-up word, the electronic device 101 may change the state of the electronic device 101 from an idle state to an active state. The electronic device 101 may receive, as a voice command, a user utterance input after the wake-up word.

Substantially the same as the electronic device 101, the plurality of external electronic devices 102-1, 102-2, and 102-3 may also receive a voice signal from the user, determine whether the voice signal includes the wake-up word, and set the state of each of the plurality of external electronic devices 102-1, 102-2, and 102-3 to an active state.

According to an embodiment, when it is determined that the voice signal does not include the wake-up word in operation 710, the electronic device 101 may receive the voice signal in operation 610.

The electronic device 101 according to an embodiment may perform communication connections with the plurality of external electronic devices 102-1, 102-2, and 102-3 in operation 720. For example, the electronic device 101 may perform communication connections with the plurality of external electronic devices 102-1, 102-2, and 102-3 according to a wireless network (e.g., Wi-Fi or Bluetooth) connection method.

The electronic device 101 and the plurality of external electronic devices 102-1, 102-2, and 102-3 according to an embodiment may identify that a target of an operation according to the voice signal is the electronic device 101. For example, the electronic device 101 and the plurality of external electronic devices 102-1, 102-2, and 102-3 may share the magnitudes (e.g., signal-to-noise ratio (SNR)) of the received voice signals. Based on the magnitudes of the shared voice signals, the electronic device 101 and the plurality of external electronic devices 102-1, 102-2, and 102-3 may identify that the electronic device 101 is the target of the operation according to the voice signal. For example, when the user speaks while in the closest position to the electronic device 101, since the magnitude of the voice signal received by the electronic device 101 is the largest, the electronic device 101 and the plurality of external electronic devices 102-1, 102-2, and 102-3 may identify that the electronic device 101 is the target of the operation according to the voice signal.

In operation 730, the electronic device 101 according to an embodiment may receive the states of the plurality of external electronic devices 102-1, 102-2, and 102-3 from the plurality of external electronic devices 102-1, 102-2, and 102-3. For example, each of the plurality of external electronic devices 102-1, 102-2, and 102-3 may transmit its state to the electronic device 101 that is the target of the operation according to the voice signal.

Based on the states of the plurality of external electronic devices 102-1, 102-2, and 102-3 received in operation 730, the electronic device 101 according to an embodiment may determine an optimal device for processing the voice signal from among the plurality of external electronic devices 102-1, 102-2, and 102-3 connected to the electronic device 101 in operation 620.

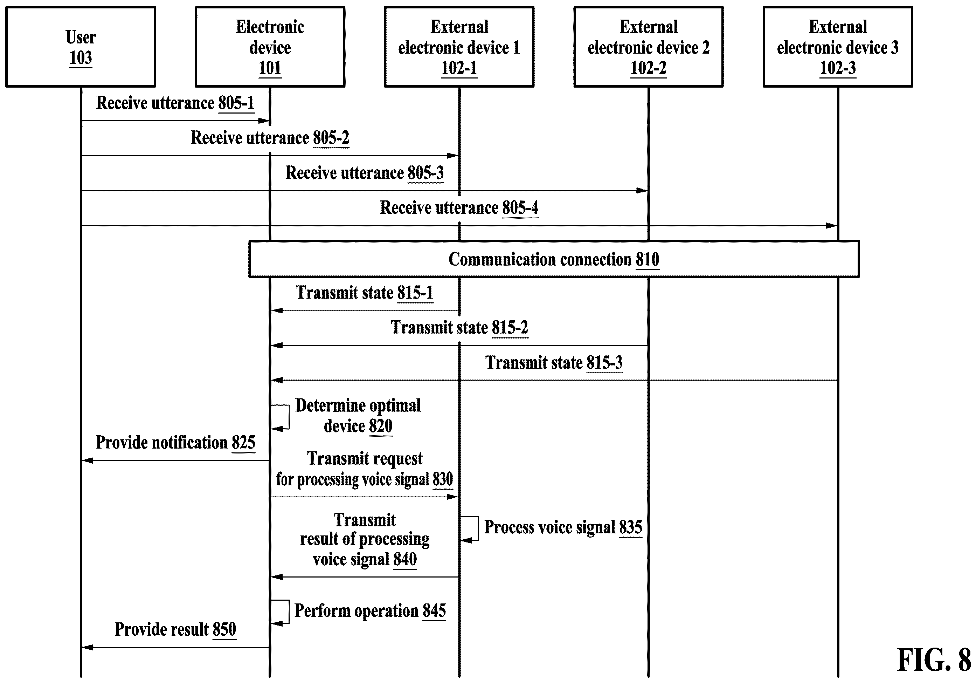

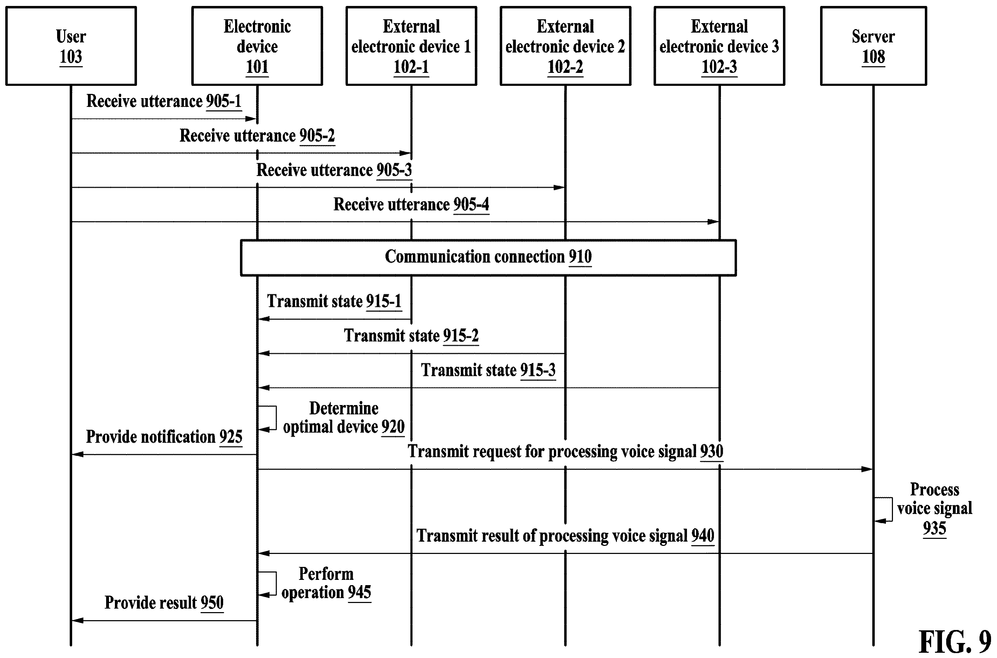

FIGS. 8 and 9 are diagrams illustrating a method of processing an audio signal according to various embodiments.

In the following embodiments, operations may be performed sequentially but not necessarily. For example, the order of the operations may change, and at least two of the operations may be performed in parallel.

According to an embodiment, it may be understood that operations 805-1 to 850 may be performed by a processor (e.g., the processor 120 of FIGS. 1 and 2) of an electronic device (e.g., the electronic device 101 of FIGS. 1, 2, and 5) or a processor of each of the external electronic devices 102-1, 102-2, and 102-3.

Referring to FIG. 8, the electronic device 101 according to an embodiment may receive an utterance from a user 103 in operation 805-1. The external electronic device 1 102-1 may receive the utterance from the user 103 in operation 805-2. The external electronic device 2 102-2 may receive the utterance from the user 103 in operation 805-3. The external electronic device 3 102-3 may receive the utterance from the user 103 in operation 805-4.

The utterance may include a wake-up word. The electronic device 101, the external electronic device 1 102-1 (e.g., the external electronic device 1 102-1 of FIG. 5), the external electronic device 2 102-2 (e.g., the external electronic device 2 102-2 of FIG. 5), and the external electronic device 3 102-3 (e.g., the external electronic device 3 102-3 of FIG. 5) may determine whether a voice signal includes a wake-up word. When the voice signal includes the wake-up word, a state of each of the electronic device 101, the external electronic device 1 102-1, the external electronic device 2 102-2, and the external electronic device 102-3 may be set to an active state.

The electronic device 101, the external electronic device 1 102-1, the external electronic device 2 102-2, and the external electronic device 102-3 according to an embodiment may be connected to one another for communication in operation 810. The electronic device 101, the external electronic device 1 102-1, the external electronic device 2 102-2, and the external electronic device 102-3 may be connected to one another for communication such that a local network (e.g., the local network 510 of FIG. 5) may be formed.

For example, the external electronic device 1 102-1 may transmit a state to the electronic device 101 in operation 815-1. For example, the external electronic device 2 102-2 may transmit a state to the electronic device 101 in operation 815-2. For example, the external electronic device 3 102-3 may transmit a state to the electronic device 101 in operation 815-3.

According to an embodiment, the electronic device 101 may determine an optimal device in operation 820. For example, based on the states of the external electronic device 1 102-1, the external electronic device 2 102-2, and the external electronic device 102-3 and a set policy, the electronic device 101 may determine the optimal device.

The policy may include a priority determined based on at least one of whether the external electronic devices 102-1, 102-2, and 102-3 may process a voice signal, hardware performance and an operation state of each of the external electronic devices 102-1, 102-2, and 102-3. The electronic device 101 may determine the optimal device according to the priority.

The electronic device 101 according to an embodiment may provide a notification to the user 103 in operation 825. For example, the electronic device 101 may provide information about processing the voice signal using the optimal device in operation 825.

The electronic device 101 according to an embodiment may transmit a request for processing the voice signal to the optimal device (e.g., the external electronic device 1 102-1) determined in operation 830.

The external electronic device 1 102-1 according to an embodiment may process the voice signal in operation 835. For example, using a natural language platform (e.g., the natural language platform 220 of FIG. 2), the external electronic device 1 102-1 may process the voice signal.

The electronic device 101 according to an embodiment may receive a result of processing the voice signal from the external electronic device 1 102-1 in operation 840.

The electronic device 101 according to an embodiment may perform an operation according to the result of processing the voice signal in operation 845. The electronic device 101 may provide the result of processing the voice signal to the user 103 in operation 850.

According to an embodiment, it may be understood that operations 905-1 to 950 may be performed by a processor (e.g., the processor 120 of FIGS. 1 and 2) of an electronic device (e.g., the electronic device 101 of FIGS. 1, 2, and 5), a processor of each of the external electronic devices 102-1, 102-2, and 102-3, or a processor of the server 108.

Referring to FIG. 9, the electronic device 101 may receive an utterance from the user 103 in operation 905-1. The external electronic device 1 102-1 may receive the utterance from the user 103 in operation 905-2. The external electronic device 2 102-2 may receive the utterance from the user 103 in operation 905-3. The external electronic device 3 102-3 may receive the utterance from the user 103 in operation 905-4.

The electronic device 101, the external electronic device 1 102-1, the external electronic device 2 102-2, and the external electronic device 102-3 according to an embodiment may be connected to one another for communication in operation 910.

For example, the external electronic device 1 102-1 may transmit a state to the electronic device 101 in operation 915-1. For example, the external electronic device 2 102-2 may transmit a state to the electronic device 101 in operation 915-2. For example, the external electronic device 3 102-3 may transmit a state to the electronic device 101 in operation 915-3.

The electronic device 101 according to an embodiment may determine an optimal device in operation 920. In operation 920, the electronic device 101 may determine that there is no optimal device among the plurality of external electronic devices 102-1, 102-2, and 102-3.

For example, when the supported device types of the plurality of external electronic devices 102-1, 102-2, and 102-3 do not correspond to the type of the electronic device 101, when none of the plurality of external electronic devices 102-1, 102-2, and 102-3 include the natural language platform 220, and when a voice signal may not be processed based on the states (e.g., hardware performance, network performance, and an operation state) of the plurality of external electronic devices 102-1, 102-2, and 102-3, the electronic device 101 may determine that there is no optimal device among the external electronic devices 102-1, 102-2, and 102-3.

The electronic device 101 according to an embodiment may provide a notification to the user 103 in operation 925. For example, the electronic device 101 may provide a notification of processing a voice signal using the server 108.

In operation 930, the electronic device 101 according to an embodiment may transmit a request for processing the voice signal to the server 108 that is connected to the electronic device 101 for communication.

For example, the server 108 may process the voice signal in operation 935 and transmit a result of processing the voice signal to the electronic device 101 in operation 940.

The electronic device 101 according to an embodiment may perform an operation in operation 945 according to the result of processing the voice signal received from the server 108 in operation 940. The electronic device 101 may provide the result of processing the voice signal to the user 103 in operation 950.

The descriptions of operations 805-1, 805-2, 805-3, 805-4, 810, 815-1, 815-2, 815-3, 825, 845, and 850 of FIG. 8 may apply, respectively, to operations 905-1, 905-2, 905-3, 905-4, 910, 915-1, 915-2, 915-3, 925, 945, and 950 of FIG. 9 in substantially the same manner.

For example, when the electronic device 101 includes a natural language platform (e.g., the natural language platform 220 of FIG. 2), the electronic device 101 may process the voice signal using the natural language platform 220. For example, when the electronic device 101 determines that there is no optimal device among the plurality of external electronic devices 102-1, 102-2, and 102-3, the electronic device 101 may process the voice signal using the natural language platform 220.

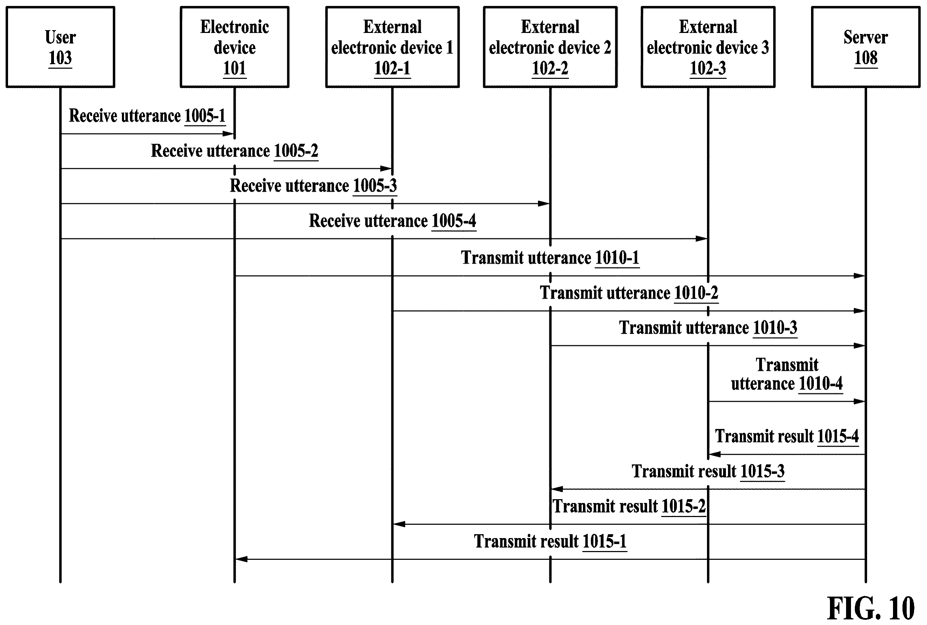

FIG. 10 is a diagram illustrating an operation in which an electronic device (e.g., the electronic device 101 of FIGS. 1, 2, 5, 8, and 9) and a plurality of external electronic devices 102-1, 102-2, and 102-3 (e.g., the electronic devices 101, 102, and 104 of FIG. 1, the electronic device 101 of FIG. 2, and the plurality of external electronic devices 102-1, 102-2, and 102-3 of FIGS 5, 8, and 9) according to various embodiments receive information about a device for performing speech recognition from the server 108.

FIG. 10 is a diagram illustrating an example in which the electronic device 101 and the plurality of external electronic devices 102-1, 102-2, and 102-3 identify that the electronic device 101 is a device for performing a voice command, based on the information received from the server 108.

In the following embodiments, operations may be performed sequentially but not necessarily. For example, the order of the operations may change, and at least two of the operations may be performed in parallel.

According to an embodiment, it may be understood that operations 1005-1 to 1015-4 may be performed by a processor (e.g., the processor 120 of FIGS. 1 and 2) of an electronic device (e.g., the electronic device 101 of FIGS. 1, 2, and 5), a processor of each of the external electronic devices 102-1, 102-2, and 102-3, or a processor of the server 108.

The electronic device 101 according to an embodiment may receive an utterance from the user 103 in operation 1005-1. The external electronic device 1 102-1 may receive the utterance from the user 103 in operation 1005-2. The external electronic device 2 102-2 may receive the utterance from the user 103 in operation 1005-3. The external electronic device 3 102-3 may receive the utterance from the user 103 in operation 1005-4.

The electronic device 101 according to an embodiment may transmit the utterance (e.g., a voice signal) to the server 108 in operation 1010-1. The external electronic device 1 102-1 may transmit the utterance (e.g., the voice signal) to the server 108 in operation 1010-2. The external electronic device 2 102-2 may transmit the utterance (e.g., the voice signal) to the server 108 in operation 1010-3. The external electronic device 3 102-3 may transmit the utterance (e.g., the voice signal) to the server 108 in operation 1010-4.

For example, based on the voice signals received from the electronic device 101, the external electronic device 1 102-1, the external electronic device 2 102-2, and the external electronic device 3 102-3, the server 108 may determine a device to operate according to the voice command. For example, using the magnitudes (e.g., SNR) of the voices signals received from the electronic device 101, the external electronic device 1 102-1, the external electronic device 2 102-2, and the external electronic device 3 102-3, the server 108 may determine a device to operate according to the voice command.

For example, when the user 103 approaches the electronic device 101 and speaks, the magnitude of the voice signal received by the electronic device 101 may be the greatest, and the server 108 may determine the electronic device 101 as the device to operate according to the voice command spoken by the user.

For example, the server 108 may transmit a result of determining the device to operate according to the voice command to the electronic device 101 in operation 1015-1. The server 108 may transmit the result of determining the device to operate according to the voice command to the external electronic device 1 102-1 in operation 1015-2. The server 108 may transmit the result of determining the device to operate according to the voice command to the external electronic device 2 102-2 in operation 1015-3. The server 108 may transmit the result of determining the device to operate according to the voice command to the external electronic device 3 102-3 in operation 1015-4.

For example, based on the respective results received from the server 108, the electronic device 101, the external electronic device 1 102-1, the external electronic device 2 102-2, and the external electronic device 3 102-3 may identify that the electronic device 101 is the device to operate according to the voice command.

The external electronic device 1 102-1, the external electronic device 2 102-2, and the external electronic device 3 102-3 may transmit states as in operations 815-1, 815-2, and 815-3 of FIG. 8, respectively, or as in operations 915-1, 915-2, and 915-3 of FIG. 9, respectively.

The electronic device 101 may determine an optimal device as in operation 820 of FIG. 8 or operation 920 of FIG. 9.

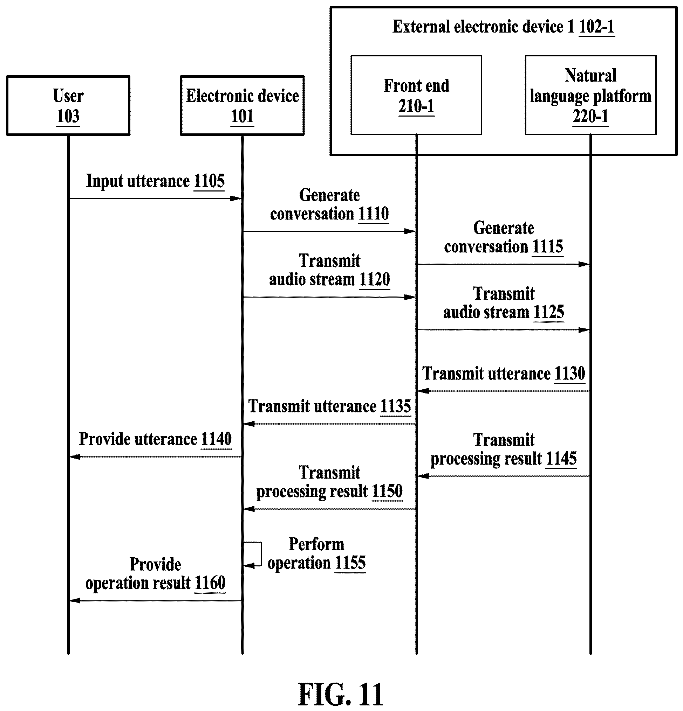

FIG. 11 is a diagram illustrating an operation in which an electronic device (e.g., the electronic device 101 of FIGS. 1, 2, 5, 8, 9, and 10) performs speech recognition using the external electronic device 1 102-1 (e.g., the external electronic device 1 102-1 of FIGS. 5, 8, 9, and 10), according to various embodiments.

In the following embodiments, operations may be performed sequentially but not necessarily. For example, the order of the operations may change, and at least two of the operations may be performed in parallel.

According to an embodiment, it may be understood that operations 1105 to 1160 may be performed by a processor (e.g., the processor 120 of FIGS. 1 and 2 ) of an electronic device (e.g., the electronic device 101 of FIGS. 1, 2, and 5) or a processor of the external electronic device 1 102-1.

The electronic device 101 may receive an utterance input by the user 103 in operation 1105. The electronic device 101 may be connected to the external electronic device 1 102-1 for communication via a front end 210-1 (e.g., the front end 210 of FIG. 2) of the external electronic device 1 102-1. For example, the electronic device may transmit a Bluetooth low energy (BLE) advertising signal to the front end 210-1. The external electronic device 102-1 that receives the BLE advertising signal may be connected to the electronic device 101 for communication (e.g., Wi-Fi connection) via the front end 210-1.

For example, the electronic device 101 may generate a conversation with the front end 210-1 in operation 1110. Using a voice and context of the user, the electronic device 101 may generate the conversation.

For example, the front end 210-1 may generate a conversation with a natural language platform 220-1 (e.g., the natural language platform 220 of FIG. 2) in operation 1115. The electronic device 101 may transmit audio stream to the front end 210-1 in operation 1120. The front end 210-1 may transmit the audio stream to the natural language platform 220-1 in operation 1125.

For example, the natural language platform 220-1 may transmit the utterance to the front end 210-1 in operation 1130. The front end 210-1 may transmit the utterance to the electronic device 101 in operation 1135. The electronic device 101 may provide the utterance to the user 101 in operation 1140.

In operations 1130, 1135, and 1140, the utterance may include text information obtained by the natural language platform 220-1 converting a voice signal of the user 103 into text using the audio stream. For example, the electronic device 101 may provide the text information to the user 103 through a display module (e.g., the display module 160 of FIG. 1).

According to an embodiment, the natural language platform 220-1 may transmit a result of processing the audio stream to the front end 210-1 in operation 1145. The front end 210-1 may transmit the result of processing the audio stream to the electronic device 101 in operation 1150.

The result of processing the audio stream may include a plan generated by processing the voice command.

The electronic device 101 according to an embodiment may perform an operation according to the received processing result in operation 1155. An operation according to the processing result may include various operations such as controlling a component (e.g., the processor 120 and the memory 130 of FIGS. 1 and 2) of the electronic device 101, outputting a sound signal, displaying a screen, and executing a program or an application. However, embodiments are not limited thereto.

The electronic device 101 may provide a result of operation 1155 to the user 103 in operation 1160.

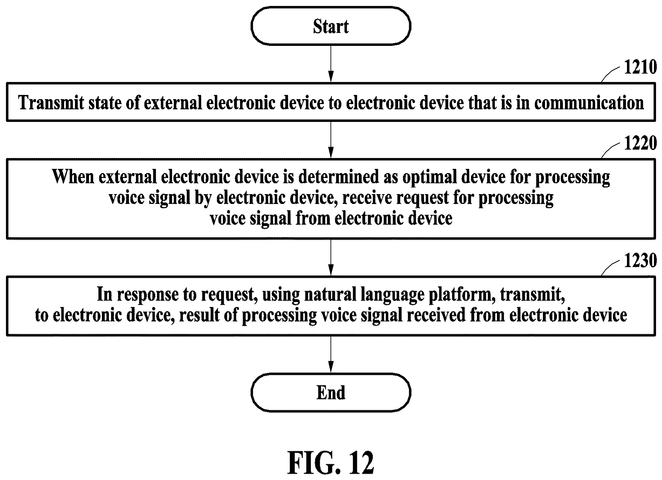

FIG. 12 is a flowchart illustrating an operation of an electronic device (e.g., the electronic devices 102 and 104 of FIG. 1 and the plurality of external electronic devices 102-1, 102-2, and 102-3 of FIGS. 5, 8, 9, and 10) performing a method of processing an audio signal, according to various embodiments.

In the following embodiments, operations may be performed sequentially but not necessarily. For example, the order of the operations may change, and at least two of the operations may be performed in parallel.

It may be understood that may be performed by a processor (e.g., the processor 120 of FIGS. 1 and 2) of an electronic device (e.g., the electronic device 101 of FIGS. 1, 2, and 5) or a processor of each of the external electronic devices 102-1, 102-2, and 102-3.

In operation 1210, the external electronic devices 102-1, 102-2, and 102-3 may transmit states of the external electronic devices 102-1, 102-2, and 102-3 to the electronic device (e.g., the electronic device 101 of FIGS. 1, 5, 8, 9, and 10) that is in communication.

For example, based on a wake-up word included in a voice signal received from a user (e.g., the user 103 of FIG. 8) before operation 1210, the external electronic devices 102-1, 102-2, and 102-3 may set the states of the external electronic devices 102-1, 102-2, and 102-3 to an active state.

For example, the external electronic devices 102-1, 102-2, and 102-3 in the active state may be connected to the electronic device 101 for communication and may form a local network (e.g., the local network 510 of FIG. 5). Based on the voice signal received from the user 103, the external electronic devices 102-1, 102-2, and 102-3 may identify that the electronic device 101 is a device that performs an operation according to a voice command.

For example, when the external electronic devices 102-1, 102-2, and 102-3 are determined by the electronic device 101 as optimal devices for processing the voice signal, the external electronic devices 102-1, 102-2, and 102-3 may receive a request for processing the voice signal from the electronic device 101 in operation 1220.

For example, in operation 1220, the external electronic devices 102-1, 102-2, and 102-3 may receive a request for transmitting a state from the electronic device 101 and transmit the state to the electronic device 101.

For example, in operation 1220, based on the fact that the electronic device 101 is identified as the device to operate according to the voice command, the external electronic devices 102-1, 102-2, and 102-3 may transmit the state to the electronic device 101.

For example, in operation 1230, in response to the request, using a natural language platform (e.g., the natural language platform 220 of FIG. 2), the external electronic devices 102-1, 102-2, and 102-3 may transmit, to the electronic device 101, a result of processing the voice signal received from the electronic device 101.

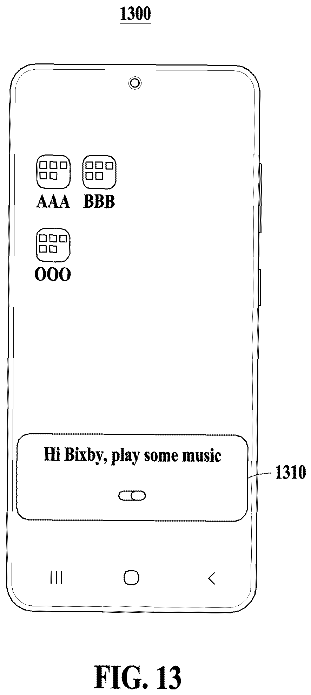

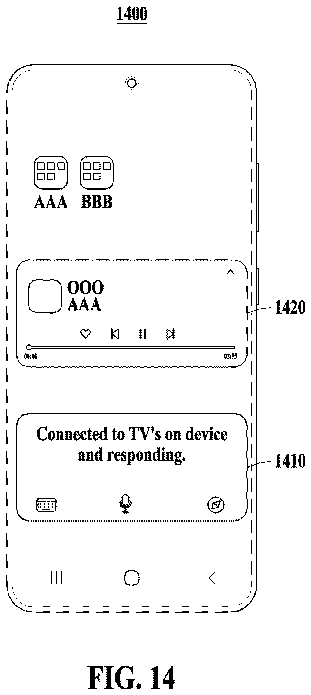

FIGS. 13 and 14 are diagrams illustrating a UI provided by an electronic device (e.g., the electronic device 101 of FIGS. 1, 2, 5, 8, 9, and 10), according to various embodiments.

According to an embodiment, as illustrated in FIG. 13, the electronic device 101 may provide a result of recognizing a voice signal received from a user in a notification window 1310 on a screen 1300. In FIG. 13, the voice signal received from the user is "Hi Bixby, play some music," and the electronic device 101 may provide the result of recognizing the voice signal through the notification window 1310.

In FIG. 13, an interface through which the electronic device 101 provides the result of recognizing the voice signal in the notification window 1310 is an example among various embodiments and is not limited to the embodiment illustrated in FIG. 13. For example, the electronic device 101 may convert the result of recognizing the voice signal into a sound signal and provide the sound signal through a sound output module (e.g., the sound output module 155 of FIG. 1).

According to an embodiment, as illustrated in FIG. 14, the electronic device 101 may provide the result of processing the voice signal using an external electronic device (e.g., the electronic devices 101, 102, and 104 of FIG. 1, the electronic device 101 of FIG. 2, and the plurality of external electronic devices 102-1, 102-2, and 102-3 of FIGS. 5, 8, 9, and 10) on a screen 1400.

As illustrated in FIG. 14, when the voice signal is processed by an optimal device determined to process the voice signal among the plurality of external electronic devices 102-1, 102-2, and 102-3, the electronic device 101 may provide a notification window 1410. As shown in the notification window 1410, the electronic device 101 may display, through the notification window 1410, that the voice signal is processed by the optimal device (e.g., TV).

In FIG. 14, the electronic device 101 displays information indicating that the electronic device 101 is responding by being connected to the determined optimal device through the notification window 1410. However, the information provided through the notification window 1410 is not limited to the embodiment illustrated in FIG. 14. For example, when the determined optimal device completes processing the voice signal and the electronic device 101 receives the processing result, the electronic device 101 may display, through the notification window 1410, information indicating that the voice signal is processed by the determined optimal device.

For example, FIG. 14 may illustrate the screen 1400 where the electronic device 101 displays the result of processing the voice signal ("Hi Bixby, play some music") of FIG. 13. In FIG. 14, the electronic device 101 may execute an application for playing some music in response to a voice command (e.g., "play some music") included in the voice signal. The electronic device 101 may provide a notification window 1420 (or a pop-up or control window) of an application for playing some music.

For example, in the voice signal ("Hi Bixby, play some music"), "Hi Bixby" may correspond to a wake-up word.

FIG. 14 illustrates an example in which the electronic device 101 provides a result of performing an operation corresponding to the voice signal (e.g., "Hi Bixby, play some music") through the notification window 1420. A UI through which the electronic device 101 provides the result of performing an operation corresponding to the voice signal is not limited to FIG. 14.

For example, when the voice signal is "Hi Bixby, call A," the electronic device 101 may execute a voice calling application and place a call to A's contact stored in an address book. Additionally, the electronic device 101 may switch the screen depending on the application being executed.

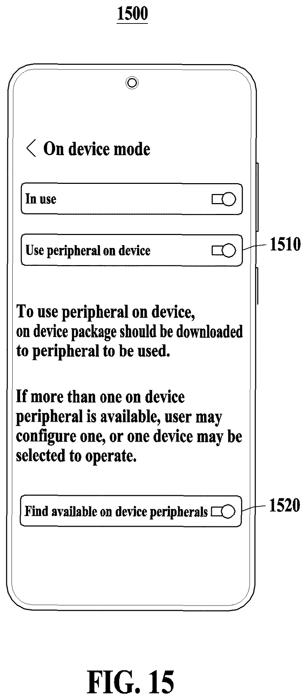

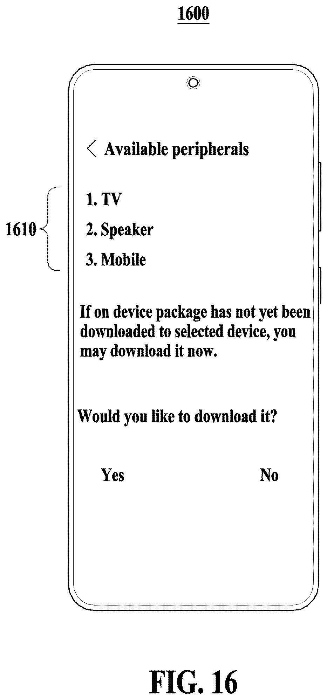

FIGS. 15 and 16 are diagrams illustrating a UI provided by an electronic device (e.g., the electronic device 101 of FIGS. 1, 2, 5, 8, 9, and 10), according to various embodiments.

As illustrated in FIG. 15, using a plurality of external electronic devices (e.g., the electronic devices 101, 102, and 104 of FIG. 1, the electronic device 101 of FIG. 2, and the plurality of external electronic devices 102-1, 102-2, and 102-3 of FIGS. 5, 8, 9, and 10) on a screen 1500, the electronic device 101 may provide an interface 1510 for setting whether to process a voice signal and an interface 1520 for setting the plurality of external electronic devices 102-1, 102-2, and 102-3.

For example, when a setting of the interface 1510 is activated based on a user input, the electronic device 101 may process a voice signal using an optimal device determined from among the plurality of external electronic devices 102-1, 102-2, and 102-3 and operate according to a result of processing the voice signal, as described with reference to FIGS. 5 to 11.

For example, when the setting of the interface 1510 is deactivated based on a user input, the electronic device 101 may process the voice signal using a natural language platform (e.g., the natural language platform 220 of FIG. 2) included in the electronic device 101 or transmit the voice signal to a server (e.g., the server 108 of FIG. 1 and the intelligent server 200 of FIG. 2), and operate based on the result of processing the voice signal received from the server 108.

In FIG. 15, when the interface 1520 is selected according to a user input, the electronic device 101 may provide, on a screen 1600, a device that may be connected to the electronic device 101 for communication, as illustrated in FIG. 16.

For example, the electronic device 101 may provide, on the screen 1600, a list 1610 of external electronic devices that may be connected to the electronic device 101.

For example, when two or more devices are selected from the list 1610 of external electronic devices, the electronic device 101 may determine an optimal device for processing the voice signal from among the plurality of selected external electronic devices.

For example, when one external electronic device is selected from the list 1610 of external electronic devices, the electronic device 101 may determine the selected external electronic device as the optimal device for processing the voice signal.

An electronic device according to various embodiments (e.g., the electronic device 101 of FIGS. 1, 2, 5, 8, 9, and 10) may include a processor (e.g., the processor 120 of FIGS. 1 and 2) and memory (e.g., the memory 130 of FIGS. 1 and 2) electrically connected to the processor 120 and storing instructions executed by the processor 120. When the instructions are executed by the processor 120, the processor 120 may cause the electronic device 101 to receive a voice signal from a user. The processor 120 may cause the electronic device 101 to determine an optimal device for processing the voice signal from among a plurality of external electronic devices (e.g., the electronic devices 101, 102, and 104 of FIG. 1, the electronic device 101 of FIG. 2, and the plurality of external electronic devices 102-1, 102-2, and 102-3 of FIGS. 5, 8, 9, and 10) connected to the electronic device 101 for communication. The processor 120 may cause the electronic device 101 to transmit a request for processing the voice signal to the optimal device to process the voice signal. The processor 120 may cause the electronic device 101 to perform an operation according to a result of processing the voice signal received from the optimal device.

The processor 120 may cause the electronic device 101 to receive states of the plurality of external electronic devices 102-1, 102-2, and 102-3 from the plurality of external electronic devices 102-1, 102-2, and 102-3. The processor 120 may cause the electronic device 101 to determine the optimal device based on the states of the plurality of external electronic devices 102-1, 102-2, and 102-3 and a set policy.

The set policy may include a priority determined based on at least one of whether each of the plurality of external electronic devices 102-1, 102-2, and 102-3 may process the voice signal, hardware performance of and an operation state of each of the plurality of external electronic devices 102-1, 102-2, and 102-3.

The processor 120 may cause the electronic device 101 to determine that a set external electronic device from among the plurality of external electronic devices 102-1, 102-2, and 102-3 is the optimal device.

The processor 120 may cause the electronic device 101 to update, based on a set cycle, the plurality of external electronic devices 102-1, 102-2, and 102-3 connected to the electronic device 101 for communication.

When the electronic device 101 identifies a wake-up word from the voice signal, the processor 120 may cause the electronic device 101 to establish connections for communication with the plurality of external electronic devices 102-1, 102-2, and 102-3. The processor 120 may cause the electronic device 101 to receive the states of the plurality of external electronic devices 102-1, 102-2, and 102-3 from the plurality of external electronic devices 102-1, 102-2, and 102-3.

When the electronic device 101 determines that the optimal device does not exist among the plurality of external electronic devices 102-1, 102-2, and 102-3, the processor 120 may cause the electronic device 101 to transmit the voice signal to a server 108 connected to the electronic device 101 for communication. The processor 120 may cause the electronic device 101 to receive a result of processing the voice signal from the server 108.

An electronic device according to various embodiments (e.g., the electronic devices 101, 102, and 104 of FIG. 1, the electronic device 101 of FIG. 2, and the plurality of external electronic devices 102-1, 102-2, and 102-3 of FIGS. 5, 8, 9, and 10) may include a natural language platform (e.g., the natural language platform 220 of FIG. 2) for processing a voice signal, a processor (e.g., the processor 120 of FIGS. 1 and 2), and memory (e.g., the memory 130 of FIGS. 1 and 2) electrically connected to the processor 120 and storing instructions to be executed by the processor 120. When the instructions are executed by the processor 120, the processor 120 may cause the electronic device 102-1, 102-2, or 102-3 to transmit a state of the electronic device 102-1, 102-2, or 102-3 to an external electronic device (e.g., the electronic device 101 of FIGS. 1, 2, 5, 8, 9, and 10) that is in communication. When the external electronic device 101 determines that the electronic device 102-1, 102-2, or 102-3 is an optimal device for processing the voice signal, the processor 120 may cause the electronic device 102-1, 102-2, or 102-3 to receive a request for processing the voice signal from the external electronic device 101. In response to the request, the processor 120 may cause the electronic device 102-1, 102-2, or 102-3 to transmit, to the external electronic device 101, a result of processing the voice signal received from the external electronic device 101 using the natural language platform 220.

The processor 120 may cause the electronic device 101 to, based on a wake-up word included in the voice signal received from a user, set the electronic device 102-1, 102-2, or 102-3 to be an active state. The processor 120 may cause the electronic device 101 in the active state to establish a connection for communication with the external electronic device 101.

A method of processing a voice signal according to various embodiments may include receiving a voice signal from a user, determining an optimal device for processing the voice signal from among a plurality of external electronic devices 102-1, 102-2, and 102-3 connected to an electronic device (e.g., the electronic device 101 of FIGS. 1, 2, 5, 8, 9, and 10) for communication, transmitting a request for processing the voice signal to the optimal device, and performing an operation according to a result of processing the voice signal received from the optimal device.

The determining of the optimal device may include receiving states of the plurality of external electronic devices (e.g., the electronic devices 101, 102, and 104 of FIG. 1, the electronic device 101 of FIG. 2, and the plurality of external electronic devices 102-1, 102-2, and 102-3 of FIGS. 5, 8, 9, and 10) from the plurality of external electronic devices 102-1, 102-2, and 102-3. The determining of the optimal device may include determining the optimal device based on the states of the plurality of external electronic devices 102-1, 102-2, and 102-3 and a set policy.

The set policy may include a priority determined based on at least one of whether each of the plurality of external electronic devices 102-1, 102-2, and 102-3 may process the voice signal, hardware performance of and an operation state of each of the plurality of external electronic devices 102-1, 102-2, and 102-3.

The determining of the optimal device may include determining, as the optimal device, a set external electronic device 102-1, 102-2, or 102-3 from among the plurality of external electronic devices 102-1, 102-2, and 102-3.

The method may further include, based on a set cycle, updating the plurality of external electronic devices 102-1, 102-2, and 102-3 connected to the electronic device 101 for communication.

The voice signal may include a wake-up word for setting operation states of the electronic device 101 and the plurality of external electronic devices 102-1, 102-2, and 102-3 to be an active state. The method may further include, when the wake-up word is identified, establishing connections for communication with the plurality of external electronic devices 102-1, 102-2, and 102-3. The method may further include receiving the states of the plurality of external electronic devices 102-1, 102-2, and 102-3 from the plurality of external electronic devices 102-1, 102-2, and 102-3.

The method may further include, when it is determined that the optimal device does not exist among the plurality of external electronic devices 102-1, 102-2, and 102-3, transmitting the voice signal to a server 108 connected to the electronic device 101 for communication. The method further include receiving a result of processing the voice signal from the server 108.

The electronic device according to various embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the present disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms such as "1st" and "2nd," or "first" and "second" may be used to simply distinguish a corresponding component from another, and do not limit the components in other aspect (e.g., importance or order). It is to be understood that if an element (e.g., a first element) is referred to, with or without the term "operatively" or "communicatively," as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware and may interchangeably be used with other terms, for example, "logic," "logic block," "part," or "circuitry." A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. A machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a processor (120); and
memory (130) electrically connected to the processor (120) and storing instructions to be executed by the processor (120),
wherein, when the instructions are executed by the processor (120), the processor (120) causes the electronic device (101) to:
receive a voice signal from a user;
determine an optimal device for processing the voice signal from among a plurality of external electronic devices (102-1; 102-2; 102-3) connected to the electronic device (101) for communication;
transmit a request for processing the voice signal to the optimal device to process the voice signal; and
perform an operation according to a result of processing the voice signal received from the optimal device.

2. The electronic device (101) of claim 1, wherein the processor (120) causes the electronic device (101) to:
receive states of the plurality of external electronic devices (102-1; 102-2; 102-3) from the plurality of external electronic devices (102-1; 102-2; 102-3); and
based on the states of the plurality of external electronic devices (102-1; 102-2; 102-3) and a set policy, determine the optimal device.

3. The electronic device (101) of any one of claims 1 and 2, wherein the set policy comprises a priority determined based on at least one of whether each of the plurality of external electronic devices (102-1; 102-2; 102-3) is able to process the voice signal, hardware performance of and an operation state of each of the plurality of external electronic devices (102-1; 102-2; 102-3).

4. The electronic device (101) of any one of claims 1 to 3, wherein the processor (120) causes the electronic device (101) to determine that a set external electronic device (102-1; 102-2; 102-3) from among the plurality of external electronic devices (102-1; 102-2; 102-3) is the optimal device.

5. The electronic device (101) of any one of claims 1 to 4, wherein the processor (120) causes the electronic device (101) to update, based on a set cycle, the plurality of external electronic devices (102-1; 102-2; 102-3) connected to the electronic device (101) for communication.

6. The electronic device (101) of any one of claims 1 to 5, wherein the processor (120) causes the electronic device (101) to:
when a wake-up word is identified from the voice signal, establish a connection for communication with the plurality of external electronic devices (102-1; 102-2; 102-3); and
receive states of the plurality of external electronic devices (102-1; 102-2; 102-3) from the plurality of external electronic devices (102-1; 102-2; 102-3).

7. The electronic device (101) of any one of claims 1 to 6, wherein the processor (120) causes the electronic device (101) to:
when it is determined that the optimal device does not exist among the plurality of external electronic devices (102-1; 102-2; 102-3), transmit the voice signal to a server (108) connected to the electronic device (101) for communication; and
receive the result of processing the voice signal from the server (108).

8. An electronic device (102-1; 102-2; 102-3) comprising:
a natural language platform (220) for processing a voice signal;
a processor (120); and
memory (130) electrically connected to the processor (120) and storing instructions to be executed by the processor (120),
wherein, when the instructions are executed by the processor (120), the processor (120) causes the electronic device (102-1; 102-2; 102-3) to:
transmit a state of the electronic device (102-1; 102-2; 102-3) to an external electronic device (101) that is in communication;
when the external electronic device (101) determines that the electronic device (102-1; 102-2; 102-3) is an optimal device for processing the voice signal, receive a request for processing a voice signal from the external electronic device (101); and
in response to the request, using the natural language platform (220), transmit, to the external electronic device (101), a result of processing the voice signal received from the external electronic device (101).

9. The electronic device (102-1; 102-2; 102-3) of claim 8, wherein the processor (120) causes the electronic device (102-1; 102-2; 102-3) to:
based on a wake-up word comprised in a voice signal received from a user, set the electronic device (102-1; 102-2; 102-3) to an active state; and
connect the electronic device (102-1; 102-2; 102-3) in the active state to the external electronic device (101) for communication.

10. A method of processing a voice signal, the method comprising:
receiving a voice signal from a user;
determining an optimal device for processing the voice signal from among a plurality of external electronic devices (102-1; 102-2; 102-3) connected to an electronic device (101) for communication;
transmitting a request for processing the voice signal to the optimal device to process the voice signal; and
performing an operation according to a result of processing the voice signal received from the optimal device.

11. The method of claim 10, wherein the determining of the optimal device comprises:
receiving states of the plurality of external electronic devices (102-1; 102-2; 102-3) from the plurality of external electronic devices (102-1; 102-2; 102-3); and
based on the states of the plurality of external electronic devices (102-1; 102-2; 102-3) and a set policy, determining the optimal device.

12. The method of any one of claims 10 and 11, the set policy comprises a priority determined based on at least one of whether each of the plurality of external electronic devices (102-1; 102-2; 102-3) is able to process the voice signal, hardware performance of and an operation state of each of the plurality of external electronic devices (102-1; 102-2; 102-3).

13. The method of any one of claims 10 to 12, wherein the determining of the optimal device comprises determining a set external electronic device (102-1; 102-2; 102-3) as the optimal device from among the plurality of external electronic devices (102-1; 102-2; 102-3).

14. The electronic device (101) of any one of claims 10 to 13, further comprising: based on a set cycle, updating the plurality of external electronic devices (102-1; 102-2; 102-3) connected to the electronic device (101) for communication.

15. The method of any one of claims 10 to 14, wherein
the voice signal comprises a wake-up word for setting operation states of the electronic device (101) and the plurality of external electronic devices (102-1; 102-2; 102-3) to an active state, and
the method further comprises:
when the wake-up word is identified, establishing a connection for communication with the plurality of external electronic devices (102-1; 102-2; 102-3); and
receiving states of the plurality of external electronic devices (102-1; 102-2; 102-3) from the plurality of external electronic devices (102-1; 102-2; 102-3).
